(19) Europäisches Patentamt
European Patent Office
Office européen des brevets

(11) **EP 4 155 079 B1**

(12) **EUROPEAN PATENT SPECIFICATION**

(45) Date of publication and mention
of the grant of the patent:
**29.04.2026 Bulletin 2026/18**

(21) Application number: **21833407.6**

(22) Date of filing: **25.06.2021**

(51) International Patent Classification (IPC):
*B41J 2/01* *(2006.01)*     *C09D 11/38* *(2014.01)*
*B41M 5/00* *(2006.01)*     *C09D 11/322* *(2014.01)*
*B41J 2/165* *(2006.01)*     *B41J 2/175* *(2006.01)*

(52) Cooperative Patent Classification (CPC):
**C09D 11/322; C09D 11/38;** B41J 2/16508;
B41J 2/16532; B41J 2/16538; B41J 2/17503

(86) International application number:
**PCT/JP2021/024105**

(87) International publication number:
**WO 2022/004584 (06.01.2022 Gazette 2022/01)**

(54) **WATER-BASED INK FOR INK-JET RECORDING AND INK CARTRIDGE**

TINTE AUF WASSERBASIS FÜR TINTENSTRAHLAUFZEICHNUNG UND TINTENPATRONE

ENCRE À BASE D'EAU POUR ENREGISTREMENT À JET D'ENCRE ET CARTOUCHE D'ENCRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.06.2020 JP 2020111247**

(43) Date of publication of application:
**29.03.2023 Bulletin 2023/13**

(73) Proprietor: **BROTHER KOGYO KABUSHIKI
KAISHA**
**Nagoya-shi, Aichi 467-8561 (JP)**

(72) Inventors:
• **TAHARA Tomoyo**
**Nagoya-shi, Aichi 467-8561 (JP)**
• **IGUCHI Makito**
**Nagoya-shi, Aichi 467-8561 (JP)**
• **YAMASHITA Narumi**
**Nagoya-shi, Aichi 467-8561 (JP)**
• **SAKAGUCHI Ai**
**Nagoya-shi, Aichi 467-8561 (JP)**
• **SUZUKI Nozomi**
**Nagoya-shi, Aichi 467-8561 (JP)**
• **TSUZAKA Yuka**
**Nagoya-shi, Aichi 467-8561 (JP)**

(74) Representative: **Prüfer & Partner mbB**
**Patentanwälte · Rechtsanwälte**
**Sohnckestraße 12**
**81479 München (DE)**

(56) References cited:
EP-A1- 1 213 332         EP-A1- 1 464 684
CN-A- 107 418 301        CN-A- 108 948 863
CN-A- 108 948 864        CN-A- 109 594 372
JP-A- 2000 351 923       JP-A- 2002 235 020
JP-A- 2002 249 693       JP-A- 2005 307 184
JP-A- 2009 286 998       JP-A- 2018 172 500
JP-A- 2020 094 084       JP-A- H05 156 189
JP-A- H05 171 081        US-A1- 2011 236 649
US-A1- 2013 057 625

**Description**

## TECHNICAL FIELD

The present invention relates to a water-based ink for inkjet recording and an ink cartridge.

## BACKGROUND TECHNOLOGY

A method that increases coloring agent density is known as a method for improving the optical density (OD value) of a recorded matter made using a water-based ink (for example, see Patent Document 1).

EP 1 213 332 A1 discloses an inkjet ink composition including a pigment, water, sodium dehydroacetate, and an alkylene diol. The sodium dehydroacetate is used in the amount of 0.2 wt.% (examples).

## CITATION LIST

### PATENT DOCUMENTS

Patent Document 1: Japanese Unexamined Patent Application Publication No. 2004-231711

## SUMMARY OF THE INVENTION

### PROBLEM TO BE SOLVED BY THE INVENTION

However, when the coloring agent density is increased, there are problems in that cost increases, and the stability of the water-based ink is reduced.

Thus, an object of the present invention is to provide a water-based ink for inkjet recording which is capable of improving the optical density (OD value) of a recorded matter made using a water-based ink, without increasing the coloring agent density.

## MEANS FOR SOLVING THE PROBLEM

To achieve the foregoing object, the water-based ink for inkjet recording of the present invention is characterized by including a pigment, water, and an acidic preservative, and a penetrant, wherein the acidic preservative includes at least one of a polyvalent unsaturated fatty acid, a polyvalent unsaturated fatty acid salt, dehydroacetic acid, and a dehydroacetate, the penetrant includes at least one of an alkylene diol and a glycol ether compound the formulation amounts of the acidic preservative and the penetrant satisfy the following Condition (Y):

$$\text{Condition (Y): } 0.1 \leq A/C \leq 5$$

A: Formulated amount of the acidic preservative (% by weight)
C: Formulated amount of the penetrant (% by weight),
characterized in that the content of the acidic preservative is 0.5% by mass to 5.0% by mass.

## EFFECT OF THE INVENTION

The water-based ink for inkjet recording of the present invention can improve the optical density (OD value) of a recorded matter made using a water-based ink without increasing the coloring agent density and can impart preservative properties, by including the acidic preservative in the formulation.

## BRIEF DESCRIPTION OF THE DRAWINGS

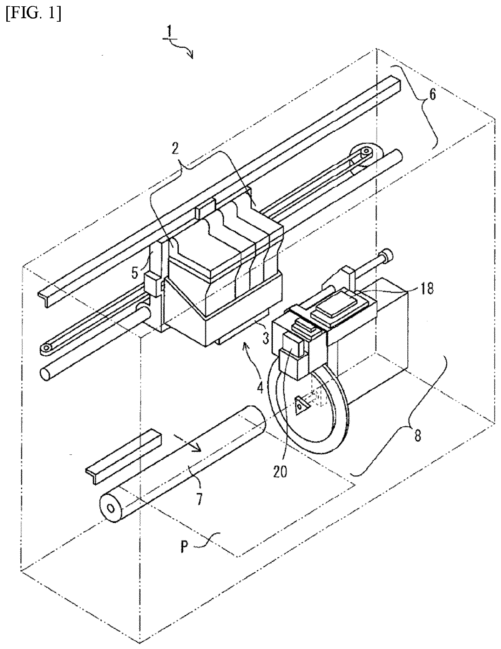

[FIG. 1] FIG. 1 is a schematic perspective view illustrating a configuration of one example of the inkjet recording device of the present invention.

## DESCRIPTION OF THE EMBODIMENTS

The water-based ink for inkjet recording of the present invention (hereinafter referred to as "water-based ink" or "ink") will be described. The water-based ink of the present invention includes a pigment, water, and an acidic preservative.

The pigment is not particularly limited, and examples include carbon black, inorganic pigments, organic pigments, and the like. Examples of the carbon black include furnace black, lamp black, acetylene black, channel black, and the like. Examples of the inorganic pigments include titanium oxide, iron oxide-based inorganic pigments, carbon black-based inorganic pigments, and the like. Examples of the organic pigments include azo pigments such as azo lake pigments, insoluble azo pigments, condensed azo pigments, and chelate azo pigments, polycyclic pigments such as phthalocyanine pigments, perylene and perinone pigments, anthraquinone pigments, quinacridone pigments, dioxazine pigments, thioindigo pigments, isoindolinone pigments and quinophthalone pigments, dye lake pigments such as basic dye lake pigments, and acidic dye lake pigments, nitro pigments, nitroso pigments, aniline black daylight fluorescent pigment, and the like. Furthermore, any other pigment that can be dispersed in a water phase can also be used. Specific examples of these pigments include, for example, C.I. Pigment Black 1, 6, and 7, C.I. Pigment Yellow 1, 2, 3, 12, 13, 14, 15, 16, 17, 55, 78, 150, 151, 154, 180, 185, and 194, C. I. Pigment Orange 31 and 43, C.I. Pigment Red 2, 3, 5, 6, 7, 12, 15, 16, 48, 48:1, 53:1, 57, 57:1, 112, 122, 123, 139, 144, 146, 149, 166, 168, 175, 176, 177, 178, 184, 185, 190, 202, 221, 222, 224, and 238, C.I. Pigment Violet 196, C. I. Pigment Blue 1, 2, 3, 15, 15:1, 15:2, 15:3, 15:4, 16, 22, and 60, C. I. Pigment Green 7 and 36, and the like.

The pigment may be a self-dispersing pigment. The self-dispersing pigment can be dispersed in water without the use of a dispersant because at least one type of hydrophilic functional group such as a carbonyl group, a hydroxyl group, a carboxylic acid group, a sulfonic acid group, a phosphoric acid group, or a salt thereof is introduced into pigment particles by chemical bonding directly or via another group. For example, as the self-dispersing pigment, a pigment treated by a method taught in JP H8-3498 A, JP 2000-513396 A (Translation of PCT Application), JP 2008-524400 A (Translation of PCT Application), JP 2009-515007 A (Translation of PCT Application), JP 2011-515535 A (Translation of PCT Application), or the like can be used. Either an inorganic pigment or an organic pigment can be used as the raw material of the self-dispersing pigment Furthermore, examples of pigments suitable for the treatment include carbon black, such as "MA8" and "MA100" made by Mitsubishi Chemical Corporation. For example, a commercial product may be used as the self-dispersing pigment. Examples of the commercial products include "CAB-O-JET ® 200," "CAB-O-JET ® 250C," "CAB-O-JET ® 260M," "CAB-O-JET ® 270Y," "CAB-O-JET ® 300," "CAB-O-JET ® 400," "CAB-O-JET ® 450C," "CAB-O-JET ® 465M" and "CAB-O-JET ® 470Y" made by Cabot Specialty Chemicals, Inc. "BONJET ® BLACK CW-2" and "BONJET ® BLACK CW-3" made by Orient Chemical Industries Co., Ltd., "LIOJET ® WD BLACK 002C" made by Toyo Ink Manufacturing Co., Ltd., and the like.

The solid formulation amount of the pigment (solid pigment content) relative to the total amount of the water-based ink is not particularly limited and can be suitably determined, for example, by a desired optical density or the like. The solid pigment formulation amount is, for example, 0.1 to 20% by weight, preferably 1 to 10% by weight, and more preferably 2 to 8% by weight.

One type of the pigment may be used alone, or two or more types may be used in combination.

The water is preferably de-ionized water or pure water. The formulation amount of water (water ratio) with respect to the total amount of the water-based ink is appropriately determined according to desired ink characteristics and the like. The water ratio may be, for example, the remainder after other components.

As described above, the water-based ink of the present invention further includes an acidic preservative.

The acidic preservative preferably includes at least one of a polyvalent unsaturated fatty acid, a polyvalent unsaturated fatty acid salt, dehydroacetic acid, and a dehydroacetate. The polyvalent unsaturated fatty acid is preferably sorbic acid, and the polyvalent unsaturated fatty acid salt is preferably a sorbate. The sorbate preferably includes at least one of potassium sorbate and sodium sorbate. The dehydroacetate is preferably sodium dehydroacetate.

The acidic preservative may include another preservative (hereinafter referred to as "other preservative") in addition to or instead of at the least one of a polyvalent unsaturated fatty acid, a polyvalent unsaturated fatty acid salt, dehydroacetic acid, and a dehydroacetate. Examples of the other preservatives include salicylic acid, benzoic acid, benzoate, and the like.

One type of the acidic preservative may be used alone, or two or more types may be used in combination.

The formulation amount of the acidic preservative with respect to the total amount of water-based ink is 0.5 to 5.0% by weight.

As described above, the water-based ink of the present invention, by including the acidic preservative in the formulation, can improve the optical density (OD value) of a recorded matter made using a water-based ink without increasing the coloring agent density, and can impart preservative properties. The mechanism for improving the optical density (OD value) by adding the acidic preservative is, for example, presumed to be the following. First, because polyvalent unsaturated fatty acid salts and dehydroacetates readily dissolve in water, it is believed that unsaturated fatty acid anions and metal cations, and dehydroacetic acid anions and metal cations are present in the ink solution. It is presumed that the metal cation forms a salt with a hydrophilic group on the surface of the pigment, agglomerating the pigment, resulting in an increase in the optical density (OD value). Furthermore, because the unsaturated fatty acid anion has an unsaturated bond, it readily remains on the recording medium surface together with the pigment, presumably resulting in improved optical density (OD value). However, the mechanism is only a presumption, and the present invention is not limited thereto.

The water-based ink of the present invention can impart preservative properties without using industrial preservatives and thus can be safely used without, for example, exerting adverse effects on the environment and the health of the human body.

The water-based ink may further include a surfactant. Examples of the surfactant include acetylene-based surfactants and the like.

For example, a commercial product may be used as the acetylene-based surfactant. Examples of the commercial products include "Olfine ® E1004," "Olfine ® E1008," and "Olfine ® E1010" made by Nissin Chemical Industry Co., Ltd., "Surfynol ® 440," "Surfynol ® 465," and "Surfynol ® 485" made by Air Products and Chemicals, Inc., "Acetylenol ® E40" and "Acetylenol ® E100" made by Kawaken Fine Chemicals Co., Ltd., and the like.

The water-based ink may contain another surfactant in addition to or instead of the acetylene-based surfactant. Examples of other surfactants include the nonionic surfactant "EMULGEN ®" series, "RHEODOL ®" series, "EMASOL ®" series, "EXCEL ®" series, "EMANON ®" series, "AMIET ®" series, "AMINON ®" series, and the like made by Kao Corporation, the nonionic surfactant "Sorbon ®" series and the like made by Toho Chemical Industry Co., Ltd., the nonionic surfactant "DOBANOX ®" series, "LEOCOL ®" series, "LEOX ®" series, "LAOL, LEOCOL ®" series, "LIONOL ®" series, "CADENAX ®" series, "LIONON ®" series, "LEOFAT ®" series, and the like made by Lion Corporation, the anionic surfactant "EMAL ®" series, "LATEMUL ®" series, "VENOL ®" series, "NEOPELEX ®" series, NS SOAP, KS SOAP, OS SOAP and "PELEX ®" series, and the like made by Kao Corporation, the anionic surfactant "LIPOLAN ®" series, "LIPON ®" series, "SUNNOL ®" series, "LIPOTAC ® TE, ENAGICOL" series, "LIPAL ®" series, "LOTAT ®" series, and the like made by Lion Corporation, the cationic surfactant "Catiogen ® ES-OW", "Catiogen ® ES-L," and the like made by DKS Co., Ltd. One type of the surfactant may be used alone, or two or more types may be used in combination.

The formulation amount of the surfactant is, for example, 0.01 to 5% by weight, preferably 0.05 to 5% by weight, and more preferably 0.05 to 3% by weight. In particular, the formulation amount of the acetylene-based surfactant with respect to the total amount of water-based ink is, for example, 0.01 to 5% by weight, preferably 0.05 to 3% by weight.

It is preferable that the formulation amounts of the acidic preservative and the surfactant with respect to the total amount of the water-based ink, for example, satisfies the following Condition (X). The following Condition (X) preferably has a lower limit of 0.5 or higher from the perspective of increasing the OD value and saturation. Furthermore, the following Condition (X) is preferably 50 or less from the perspective of ink discharging stability.

$$\text{Condition (X): } 0.5 \leq A/B \leq 50$$

A: Formulated amount of the acidic preservative (% by weight)
B: Formulated amount of the surfactant (% by weight)

The water-based ink preferably further includes a water-soluble organic solvent. Examples of the water-soluble organic solvent include a wetting agent for preventing drying of the water-based ink at the tip of a nozzle of an inkjet head and a penetrant for adjusting the drying speed on a recording medium.

The wetting agent is not particularly limited, and examples include lower alcohols such as methyl alcohol, ethyl alcohol, n-propyl alcohol, isopropyl alcohol, n-butyl alcohol, sec-butyl alcohol, tert-butyl alcohol; amides such as dimethylformamide and dimethylacetamide; ketones such as acetone, keto alcohols such as diacetone alcohol; ethers such as tetrahydrofuran and dioxane; polyethers such as polyalkylene glycol; polyhydric alcohols such as alkylene glycol, glycerin, trimethylolpropane, and trimethylolethane; 2-pyrrolidone; N-methyl-2-pyrrolidone; 1,3-dimethyl-2-imidazolidinone; and the like. Examples of the polyalkylene glycol include polyethylene glycol, polypropylene glycol, and the like. Examples of the alkylene glycol include ethylene glycol, propylene glycol, butylene glycol, diethylene glycol, triethylene glycol, dipropylene glycol, tripropylene glycol, thiodiglycol, hexylene glycol, and the like. One type of these wetting agents may be used alone, or two or more types may be used in combination. Of these, polyhydric alcohols such as alkylene glycol, glycerin, and the like are preferable.

The formulation amount of the wetting agent with respect to the total amount of water-based ink is, for example, 0 to 95% by weight, preferably 5 to 80% by weight, and more preferably 5 to 50% by weight.

The penetrant contains at least one of an alkylene diol and a glycol ether compound. Examples of the alkylene diol include 1,2-hexanediol, 1,2-heptanediol, 1,3-propanediol, 1,2-butanediol, 1,3-butanediol, 1,4-butanediol, 2,3-butanediol, 3-methyl-1,3-butanediol, 1,3-propanediol, 1,2-butanediol, 1,2-pentanediol, 1,4-butanediol, 1,5-pentanediol, 1,6-hexanediol, 2-methyl-2,4-pentanediol, and 3-methyl-1,5-pentanediol. Examples of the glycol ether compounds include ethylene glycol methyl ether, ethylene glycol ethyl ether, ethylene glycol-n-propyl ether, diethylene glycol methyl ether, diethylene glycol ethyl ether, diethylene glycol-n-propyl ether, diethylene glycol-n-butyl ether, diethylene glycol-n-hexyl ether, triethylene glycol methyl ether, triethylene glycol ethyl ether, triethylene glycol-n-propyl ether, triethylene glycol-n-butyl ether, propylene glycol methyl ether, propylene glycol ethyl ether, propylene glycol-n-propyl ether, propylene glycol-n-butyl ether, dipropylene glycol methyl ether, dipropylene glycol ethyl ether, dipropylene glycol-n-propyl ether, dipropylene glycol-n-butyl ether, tripropylene glycol methyl ether, tripropylene glycol ethyl ether, tripropylene glycol-n-propyl ether, tripropylene glycol-n-butyl ether, and the like. One type of the penetrant may be used alone, or two or more types may be used in combination.

The formulation amount of the penetrant with respect to the total amount of water-based ink is, for example, 1 to 20% by weight, preferably 1 to 15% by weight, and more preferably 1 to 10% by weight. In particular the formulation amount of at least one of the alkylene diol and the glycol ether compound with respect to the total amount of water-based ink is, for example, 1 to 20% by weight, preferably 1 to 15% by weight, and more preferably 1 to 10% by weight.

The formulation amounts of the acidic preservative and the penetrant with respect to the total amount of the water-based ink satisfies the following Condition (Y). The following Condition (Y) preferably has a lower limit of 0.1 or higher from the perspective of increasing the OD value and saturation. Furthermore, the following Condition (Y) is preferably 5 or less from the perspective of ink discharging stability.

$$\text{Condition (Y): } 0.1 \leq A/C \leq 5$$

A: Formulated amount of the acidic preservative (% by weight)
C: Formulated amount of the penetrant (% by weight)

The water-based ink may further include conventionally known additives as necessary. Examples of the additives include pH adjusting agents, viscosity adjusting agents, surface tension adjusting agents, mildew-proofing agents, and the like. Examples of the viscosity adjusting agent include polyvinyl alcohol, cellulose, water-soluble resin, and the like.

Next, the ink cartridge of the present invention is characterized by including a water-based ink for inkjet recording, the water-based ink being the water-based ink for inkjet recording of the present invention. For example, a conventionally known body can be used as the body of the ink cartridge.

Next, the inkjet recording device and inkjet recording method of the present invention will be described.

The inkjet recording device of the present invention is an in inkjet recording device including an ink storage part and ink discharge means and which discharges ink stored in the ink storage part via the ink discharge means, wherein the water-based ink for inkjet recording of the present invention is stored in the ink storage part.

The inkjet recording method of the present invention is an inkjet recording method for recording by discharging a water-based ink onto a recording medium by an inkjet system, wherein the water-based ink for inkjet recording of the present invention is used as the water-based ink.

The inkjet recording method of the present invention can, for example, be performed by using the inkjet recording device of the present invention. The recording includes letter printing, image printing, printing, and the like.

FIG. 1 illustrates a configuration of one example of the inkjet recording device of the present invention. As illustrated, this inkjet recording device 1 includes four ink cartridges 2, ink discharging means (inkjet head) 3, a head unit 4, a carriage 5, a drive unit 6, a platen roller 7, and a purge device 8 as main components.

The four ink cartridges 2 include water-based inks in the four colors of yellow, magenta, cyan and black, each including one color. At least one of the four colors of water-based inks is the water-based ink for inkjet recording of the present invention. The inkjet head 3 installed in the head unit 4 records on a recording medium (for example, recording paper) P. The four ink cartridges 2 and the head unit 4 are mounted on the carriage 5. The drive unit 6 drives the carriage 5 back and forth in a linear direction. For example, a conventionally known drive unit (for example, see JP 2008-246821 A) can be used as the drive unit 6. The platen roller 7 extends in the reciprocating direction of the carriage 5 and is disposed opposing the inkjet head 3.

The purge device 8 sucks up defective ink containing bubbles or the like that accumulates in the inkjet head 3. For example, a conventionally known purge device (for example, see JP 2008-246821 A) can be used as the purge device 8.

A wiper member 20 is disposed adjacent to the purge device 8 on the platen roller 7 side of the purge device 8. The wiper member 20 is formed in a spatula shape and wipes the nozzle forming surface of the inkjet head 3 in conjunction with the movement of the carriage 5. In FIG. 1, in order to prevent drying of the water-based ink, the cap 18 covers a plurality of nozzles of the inkjet head 3 that is returned to a reset position when recording is completed.

The inkjet recording device 1 of the present example has four ink cartridges 2 mounted on one carriage 5 together with the head unit 4. However, the present invention is not limited thereto. Each of the four ink cartridges 2 of the inkjet recording device 1 may be installed on a separate carriage from the head unit 4. Each cartridge of the four ink cartridges 2 may be disposed and fixed within the inkjet recording device 1, rather than being mounted on the carriage 5. In these embodiments, for example, each of the four ink cartridges 2 and the head unit 4 mounted on the carriage 5 are connected by a tube or the like, and the water-based ink is supplied from each of the four ink cartridges 2 to the head unit 4.

Inkjet recording using this inkjet recording device 1 is, for example, performed as follows. First, the recording paper P is fed from a paper feeding cassette (not illustrated) provided to the side of or below of the inkjet recording device 1. The recording paper P is introduced between the inkjet head 3 and the platen roller 7. Predetermined recording is performed on the introduced recording paper P by using the water-based ink discharged from the ink jet head 3. The recording paper P is ejected from the inkjet recording device 1 after recording. The recorded matter recorded in the water-based ink of the present invention has a high optical density (OD value). Illustration of the paper feeding mechanism and paper ejecting mechanism of the recording paper P is omitted in FIG. 1.

The device illustrated in FIG. 1 adopts a serial inkjet head, but the present invention is not limited thereto. The ink jet recording device may employ a line-type inkjet head.

## EXAMPLES

Next, examples of the present invention will be described together with comparative examples. Note, the present invention is not limited or restricted by the following examples and comparative examples.

[Examples 1 to 28 and Comparative Examples 1 to 4]

Examples 12, 14 and 27 are reference examples outside the scope of appended claims.

Components other than pigments in the water-based ink compositions (Tables 1 to 3) were uniformly mixed to obtain ink solvents. Next, the ink solvent was added to the pigment dispersed in water, and this was uniformly mixed. Then, the obtained mixture was filtered using a cellulose acetate membrane filter (pore diameter of 3.00 $\mu$m) made by Toyo Roshi Kaisha, Ltd. to obtain the water-based ink for inkjet recording in Examples 1 to 28 and Comparative Examples 1 to 4. Note, as shown in Table 1, Examples 1 to 15 used either potassium sorbate or sodium sorbate as the acidic preservative. Furthermore, as shown in Table 2, Examples 16 to 28 used sodium dehydroacetate as the acidic preservative.

The water-based inks of examples 1 to 28 and comparative examples 1 to 4 were subjected to (a) recording density evaluation and (b) preservation evaluation according to the following methods.

(a) Recording Density Evaluation

The water-based inks of Examples 1 to 28 and Comparative Examples 1 to 4 were applied to a recording medium ("Multipaper Super White+" made by Askul Corporation) such that the application amount per unit area was approximately 0.90 mg/cm$^2$, producing an evaluation sample. Optical densities (OD value) of five locations in the evaluation sample were measured using a SpectroEye spectrophotometer (light source: D50, viewing angle: 2°, ANSI-T) made by X-Rite, Incorporated, and the average value was obtained. Next, the optical density (OD value) difference ($\Delta$OD) was calculated by subtracting the optical density (OD value) in Comparative Example 1, in which the evaluation sample was produced using only a water-based black pigment ink (CAB-O-JET $^®$ 300) without using an acidic preservative, from the optical density (OD value) in Examples 1 to 14, 16 to 27, Comparative Example 2, and Comparative Example 3. Similarly, the optical density (OD value) difference ($\Delta$OD) was calculated by subtracting the optical density (OD value) in Comparative Example 4, in which the evaluation sample was produced using only a water-based magenta pigment ink (CAB-O-JET $^®$ CAB-O-JET 465) without using an acidic preservative, from the optical density (OD value) in Example 15 and Example 28. The recording density was evaluated according to the following evaluation criteria.

Recording Density Evaluation: Evaluation Criteria

AA: Improvement of optical density (OD value) ($\Delta$OD) was 0.1 or more.
A: Improvement of optical density (OD value) ($\Delta$OD) was 0.06 to 0.09.
B: Improvement of optical density (OD value) ($\Delta$OD) was 0.03 to 0.05.
C: Improvement of optical density (OD value) ($\Delta$OD) was 0.02 or less.

(b) Preservative Property Evaluation

The water-based inks of Examples 1 to 28 and Comparative Examples 1 to 4 were applied to a standard agar culture medium and stored for three days in a 35°C temperature environment.

Then, it was visually checked whether a fungal colony had developed in the standard agar culture medium, and the preservative properties were evaluated according to the following evaluation criteria.

Preservative Property Evaluation: Evaluation Criteria

A: No colonies developed
C: A colony developed

Table 1 to Table 3 show the water-based ink composition and evaluation results of the water-based inks of Examples 1 to 28 and Comparative Examples 1 to 4.

[Table 1]

[Table 1]

| | | | Example | | | | | | | | | | | | | | | |
|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 |
| Water-based ink composition (% by weight) | Pigment | CAB-O-JET ® 200 (*1) | 6.0 | 6.0 | 6.0 | 6.0 | 6.0 | 6.0 | 6.0 | 6.0 | 6.0 | 6.0 | 6.0 | 6.0 | 6.0 | 6.0 | - |
| | | CAB-O-JET ® 465 (*2) | - | - | - | - | - | - | - | - | - | - | - | - | - | - | 3.5 |
| | Preservative | Potassium sorbate (*3) | 3.0 | 5.0 | 1.0 | 0.5 | - | 5.0 | 3.0 | 0.5 | 3.0 | 3.0 | 0.5 | 3.0 | 3.0 | 3.0 | 3.0 |
| | | Sodium sorbate (*4) | - | - | - | - | 3.0 | - | - | - | - | - | - | - | - | - | - |
| | | Sodium dehydroacetate (*5) | - | - | - | - | - | - | - | - | - | - | - | - | - | - | - |
| | | Proxel GXL(s) (*6) | - | - | - | - | - | - | - | - | - | - | - | - | - | - | - |
| | | Sodium L-ascorbate (*7) | - | - | - | - | - | - | - | - | - | - | - | - | - | - | - |
| | Wetting agent | Glycerin | 13.0 | 13.0 | 13.0 | 13.0 | 13.0 | 13.0 | 13.0 | 13.0 | 13.0 | 13.0 | 13.0 | 13.0 | 13.0 | 13.0 | 16.0 |
| | | Propylene glycol | - | - | - | - | - | - | - | - | - | - | - | - | - | - | 5.0 |
| | Penetrant | Triethylene glycol n-butyl ether | 1.0 | 1.0 | 1.0 | 1.0 | 1.0 | 1.0 | 1.0 | 1.0 | 1.0 | - | - | - | 1.0 | - | 1.0 |
| | | 1,2-Hexanediol | - | - | - | - | - | - | - | - | - | 0.5 | 0.5 | - | - | - | - |
| | | 3-Methyl-1,5-pentanediol | - | - | - | - | - | - | - | - | - | 3.0 | 4.5 | - | - | - | - |
| | Surfactant | Olfine ® E1010 (*8) | 0.2 | 0.2 | 0.2 | 0.2 | 0.2 | 0.1 | 0.1 | 0.1 | - | 0.2 | 0.2 | 0.2 | - | - | 0.2 |
| | | Olfine ® E1004 (*9) | - | - | - | - | - | - | - | - | 0.2 | - | - | - | - | - | - |
| | Water | | Remainder | Remainder | Remainder | Remainder | Remainder | Remainder | Remainder | Remainder | Remainder | Remainder | Remainder | Remainder | Remainder | Remainder | Remainder |
| Ratio | | Acidic preservative / surfactant | 15.0 | 25.0 | 5.0 | 2.5 | 15.0 | 50.0 | 30.0 | 0.5 | 15.0 | 15.0 | 2.5 | 15.0 | - | - | 15.0 |
| | | Acidic preservative / penetrant | 3.0 | 5.0 | 1.0 | 0.5 | 3.0 | 5.0 | 3.0 | 0.5 | 3.0 | 0.9 | 0.1 | - | 3.0 | - | 3.0 |
| Evaluation | | Optical density (OD value) | AA (1.57) | AA (1.56) | A (1.52) | A (1.50) | B (1.48) | AA (1.56) | AA (1.55) | A (1.50) | AA (1.54) | AA (1.55) | A (1.50) | AA (1.55) | AA (1.54) | AA (1.54) | B (1.00) |
| | | Preservative performance | A | A | A | A | A | A | A | A | A | A | A | A | A | A | A |

*1: Made by Cabot Specialty Chemicals, Inc.

*2: Made by Cabot Specialty Chemicals, Inc.

*3: Made by Kanto Chemical Co., Ltd.

*4: Made by Kanto Chemical Co., Ltd.

*5: Made by Kanto Chemical Co., Ltd.

*6: Made by Arch Chemicals, Inc.; 450 ppm

*7: Made by Kanto Chemical Co., Ltd.

*8: Acetylene glycol-based surfactant (ethylene oxide (10 mol) adduct of diol): Nissin Chemical Industry Co., Ltd.; active ingredient = 100%

*9: Acetylene glycol-based surfactant (ethylene oxide (4 mol) adduct of diol): Nissin Chemical Industry Co., Ltd.; active ingredient = 100%

[Table 2]

| | | | Example | | | | | | | | | | | | |
|---|---|---|---|---|---|---|---|---|---|---|---|---|---|---|---|
| | | | 16 | 17 | 18 | 19 | 20 | 21 | 22 | 23 | 24 | 25 | 26 | 27 | 28 |
| Water-based ink composition (% by weight) | Pigment | CAB-O-JET ® 200 (*1) | 6.0 | 6.0 | 6.0 | 6.0 | 6.0 | 6.0 | 6.0 | 6.0 | 6.0 | 6.0 | 6.0 | 6.0 | - |
| | | CAB-O-JET ® 465 (*2) | - | - | - | - | - | - | - | - | - | - | - | - | 3.5 |
| | Preservative | Potassium sorbate (*3) | - | - | - | - | - | - | - | - | - | - | - | - | - |
| | | Sodium sorbate (*4) | - | - | - | - | - | - | - | - | - | - | - | - | - |
| | | Sodium dehydroacetate (*5) | 0.5 | 1.0 | 3.0 | 5.0 | 0.5 | 0.5 | 0.5 | 0.5 | 0.5 | 0.5 | 0.5 | 0.5 | 0.5 |
| | | Proxel GXL(s) (*6) | - | - | - | - | - | - | - | - | - | - | - | - | - |
| | | Sodium L-ascorbate (*7) | - | - | - | - | - | - | - | - | - | - | - | - | - |
| | Wetting agent | Glycerin | 13.0 | 13.0 | 13.0 | 13.0 | 13.0 | 13.0 | 13.0 | 13.0 | 13.0 | 13.0 | 13.0 | 13.0 | 16.0 |
| | | Propylene glycol | - | - | - | - | - | - | - | - | - | - | - | - | 5.0 |
| | Penetrant | Triethylene glycol n-butyl ether | 1.0 | 1.0 | 1.0 | 1.0 | 1.0 | 1.0 | 1.0 | - | - | - | 1.0 | - | 1.0 |
| | | 1,2-Hexanediol | - | - | - | - | - | - | - | 5.0 | 0.1 | - | - | - | - |
| | | 3-Methyl-1,5-pentanediol | - | - | - | - | - | - | - | - | 4.9 | - | - | - | - |
| | Surfactant | Olfine ® E1010 (*8) | 0.2 | 0.2 | 0.2 | 0.2 | 0.1 | 1.0 | - | 0.2 | 0.2 | 0.2 | - | - | 0.2 |
| | | Olfine ® E1004 (*9) | - | - | - | - | - | - | 0.2 | - | - | - | - | - | - |
| | Water | | Remainder | Remainder | Remainder | Remainder | Remainder | Remainder | Remainder | Remainder | Remainder | Remainder | Remainder | Remainder | Remainder |
| Ratio | Acidic preservative / surfactant | | 2.5 | 5.0 | 15.0 | 25.0 | 5.0 | 0.5 | 2.5 | 2.5 | 2.5 | 2.5 | 2.5 | - | 2.5 |
| | Acidic preservative / penetrant | | 0.5 | 1.0 | 3.0 | 5.0 | 0.5 | 0.5 | 0.5 | 0.1 | 0.1 | 0.1 | - | - | 0.5 |
| Evaluation | Optical density (OD value) | | A (1.50) | A (1.51) | A (1.52) | AA (1.55) | B (1.48) | A (1.51) | B (1.46) | A (1.51) | A (1.51) | A (1.50) | B (1.46) | B (1.46) | B (0.98) |
| | Preservative performance | | A | A | A | A | A | A | A | A | A | A | A | A | A |

EP 4 155 079 B1

*1: Made by Cabot Specialty Chemicals, Inc.

*2: Made by Cabot Specialty Chemicals, Inc.

*3: Made by Kanto Chemical Co., Ltd.

*4: Made by Kanto Chemical Co., Ltd.

*5: Made by Kanto Chemical Co., Ltd.)

*6: Made by Arch Chemicals, Inc.; 450 ppm

*7: Made by Kanto Chemical Co., Ltd.

*8: Acetylene glycol-based surfactant (ethylene oxide (10 mol) adduct of diol): Nissin Chemical Industry Co., Ltd.; active ingredient = 100%

*9: Acetylene glycol-based surfactant (ethylene oxide (4 mol) adduct of diol): Nissin Chemical Industry Co., Ltd.; active ingredient = 100%

[Table 3]

| | | | Comparative Example | | | |
|---|---|---|---|---|---|---|
| | | | 1 | 2 | 3 | 4 |
| Water-based ink composition (% by weight) | Pigment | CAB-O-JET ® 200 (*1) | 6.0 | 6.0 | 6.0 | - |
| | | CAB-O-JET ® 465 (*2) | - | - | - | 3.5 |
| | Preservative | Potassium sorbate (*3) | - | - | - | - |
| | | Sodium sorbate (*4) | - | - | - | - |
| | | Sodium dehydroacetate (*5) | - | - | - | - |
| | | Proxel GXL(s) (*6) | - | 0.2 | - | - |
| | | Sodium L-ascorbate (*7) | - | - | 0.5 | - |
| | Wetting agent | Glycerin | 13.0 | 13.0 | 13.0 | 16.0 |
| | | Propylene glycol | - | - | - | 5.0 |
| | Penetrant | Triethylene glycol n-butyl ether | 1.0 | 1.0 | 1.0 | 1.0 |
| | | 1,2-Hexanediol | - | - | - | - |
| | | 3-Methyl-1,5-pentanediol | - | - | - | - |
| | Surfactant | Olfine ® E1010 (*8) | 0.2 | 0.2 | 0.2 | 0.2 |
| | | Olfine ® E1004 (*9) | - | - | - | - |
| | Water | | Remainder | Remainder | Remainder | Remainder |
| Ratio | Acidic preservative / surfactant | | - | - | - | - |
| | Acidic preservative / penetrant | | - | - | - | - |
| Evaluation | | Optical density (OD value) | - (1.43) | C (1.43) | B (1.47) | - (0.95) |
| | | Preservative performance | C | A | C | C |

*1: Made by Cabot Specialty Chemicals, Inc.

*2: Made by Cabot Specialty Chemicals, Inc.

*3: Made by Kanto Chemical Co., Ltd.

*4: Made by Kanto Chemical Co., Ltd.

*5: Made by Kanto Chemical Co., Ltd.

*6: Made by Arch Chemicals, Inc.; 450 ppm

*7: Made by Kanto Chemical Co., Ltd.

*8: Acetylene glycol-based surfactant (ethylene oxide (10 mol) adduct of diol): Nissin Chemical Industry Co., Ltd.; active ingredient = 100%

*9: Acetylene glycol-based surfactant (ethylene oxide (4 mol) adduct of diol): Nissin Chemical Industry Co., Ltd.; active ingredient = 100%

As shown in Table 1 and Table 2, improvement in recording density (OD value) was observed in Examples 1 to 28, and the results of the preservative property evaluation were all satisfactory. In particular, the degree of improvement in recording density (OD value) was large in Examples 1, 2, 6, 7, 9, 10, 12 to 14, and 19.

Conversely, as shown in Table 3, the results of the preservative property evaluation were poor for Comparative Examples 1 and 4, which did not use preservatives. Furthermore, in Comparative Example 2, which used 1,2-dibenzinthiazolin-3-one (product name: PROXEL GXL from Arch Chemicals, Inc.) instead of the acidic preservative, the recording concentration (OD value) was the same as Comparative Example 1. Furthermore, the results of the preservative property evaluation were poor in Comparative Example 3, which used sodium ascorbate in place of the acidic preservative.

## INDUSTRIAL APPLICABILITY

As described above, the water-based ink of the present invention can improve the optical density (OD value) of a recorded matter made using a water-based ink without increasing the coloring agent density and can impart preservative properties. The applications of the water-based ink of the present invention are not particularly limited, and it can be widely applied to various types of inkjet recording.

## REFERENCE SIGNS LIST

1    Inkjet recording device
2    Ink cartridge
3    Ink discharge means (inkjet head)
4    Head unit
5    Carriage
6    Drive unit
7    Platen roller
8    Purge device

## Claims

1.  A water-based ink for inkjet recording, comprising a pigment, water, and an acidic preservative, and a penetrant, wherein

    the acidic preservative includes at least one of a polyvalent unsaturated fatty acid, a polyvalent unsaturated fatty acid salt, dehydroacetic acid, and a dehydroacetate,
    the penetrant includes at least one of an alkylene diol and a glycol ether compound
    the formulation amounts of the acidic preservative and the penetrant satisfy the following Condition (Y):

$$\text{Condition (Y): } 0.1 \leq A/C \leq 5$$

    A: Formulated amount of the acidic preservative (% by weight)
    C: Formulated amount of the penetrant (% by weight),

    **characterized in that**
    the content of the acidic preservative is 0.5% by mass to 5.0% by mass.

2.  The water-based ink for inkjet recording according to claim 1, wherein the pigment is a self-dispersing pigment.

3.  The water-based ink for inkjet recording according to claim 1 or 2, wherein the polyvalent unsaturated fatty acid is sorbic acid,
    and the polyvalent unsaturated fatty acid salt is a sorbate.

4.  The water-based ink for inkjet recording according to claim 3, wherein the sorbate includes at least one of potassium sorbate and sodium sorbate.

5.  The water-based ink for inkjet recording according to any one of claims 1 to 4, wherein the dehydroacetate is sodium dehydroacetate.

**6.** The water-based ink for inkjet recording according to any one of claims 1 to 5, further comprising a surfactant.

**7.** The water-based ink for inkjet recording according to claim 6, wherein the surfactant is an acetylene-based surfactant.

**8.** The water-based ink for inkjet recording according to any one of claims 1 to 7, wherein at least one of the alkylene diol and the glycol ether compound is at least one selected from the group consisting of 1,2-hexanediol, 3-methyl-1,5-pentanediol, and triethylene glycol-n-butyl ether (BTG).

**9.** The water-based ink for inkjet recording according to any one of claims 6 to 8, wherein the formulation amounts of the acidic preservative and the surfactant satisfy the following Condition (X):

$$\text{Condition (X): } 0.5 \leq A/B \leq 50$$

A: Formulated amount of the acidic preservative (% by weight)
B: Formulated amount of the surfactant (% by weight).

**10.** An ink cartridge comprising a water-based ink for inkjet recording, the water-based ink being the water-based ink for inkjet recording according to any one of claims 1 to 9.

**Patentansprüche**

**1.** Eine wasserbasierte Tinte für die Tintenstrahlaufzeichnung, umfassend ein Pigment, Wasser, ein saures Konservierungsmittel und ein Penetrationsmittel, wobei

das saure Konservierungsmittel mindestens eine von einer mehrwertigen ungesättigten Fettsäure, einem Salz einer mehrwertigen ungesättigten Fettsäure, Dehydroessigsäure und einem Dehydroacetat enthält,
das Penetrationsmittel mindestens eines von einem Alkylendiol und einer Glykoletherverbindung enthält,
die Mengenangaben des sauren Konservierungsmittels und des Penetrationsmittels die folgende Bedingung (Y) erfüllen:

$$\text{Bedingung (Y): } 0.1 \leq A/C \leq 5$$

A: Formulierte Menge des sauren Konservierungsmittels (in % nach Gewicht)
C: Formulierte Menge des Penetrationsmittels (in % nach Gewicht),

**dadurch gekennzeichnet, dass**
der Gehalt des sauren Konservierungsmittels 0,5 Massenprozent bis 5,0 Massenprozent beträgt.

**2.** Die wasserbasierte Tinte für die Tintenstrahlaufzeichnung nach Anspruch 1, wobei das Pigment ein selbstdispergierendes Pigment ist.

**3.** Die wasserbasierte Tinte für die Tintenstrahlaufzeichnung nach Anspruch 1 oder 2, wobei die mehrwertige ungesättigte Fettsäure Sorbinsäure ist,
und das Salz der mehrwertigen ungesättigten Fettsäure ein Sorbat ist.

**4.** Die wasserbasierte Tinte für die Tintenstrahlaufzeichnung nach Anspruch 3, wobei das Sorbat mindestens eines von Kaliumsorbat und Natriumsorbat umfasst.

**5.** Die wasserbasierte Tinte für die Tintenstrahlaufzeichnung gemäß einem der Ansprüche 1 bis 4, wobei das Dehydroacetat ein Natriumdehydroacetat ist.

**6.** Die wasserbasierte Tinte für die Tintenstrahlaufzeichnung gemäß einem der Ansprüche 1 bis 5, die ferner ein Tensid enthält.

**7.** Die wasserbasierte Tinte für die Tintenstrahlaufzeichnung nach Anspruch 6, wobei das Tensid ein acetylenbasiertes Tensid ist.

8. Die wasserbasierte Tinte für die Tintenstrahlaufzeichnung gemäß einem der Ansprüche 1 bis 7, wobei mindestens eines von dem Alkylendiool und der Glykoletherverbindung mindestens eine aus der Gruppe ausgewählt ist, die aus 1,2-Hexandiol, 3-Methyl-1,5-pentandiol und Triethylenglykol-n-butylether (BTG) besteht.

9. Die wasserbasierte Tinte für die Tintenstrahlaufzeichnung gemäß einem der Ansprüche 6 bis 8, wobei die Mengenangaben des sauren Konservierungsmittels und des Tensids die folgende Bedingung (X) erfüllen:

$$\text{Bedingung (X): } 0.5 \leq A/B \leq 50$$

A: Formulierte Menge des sauren Konservierungsmittels (in % nach Gewicht)
B: Formulierte Menge des Tensids (in % nach Gewicht).

10. Eine Tintenpatrone mit einer wasserbasierten Tinte für die Tintenstrahlaufzeichnung, wobei die wasserbasierte Tinte die wasserbasierte Tinte für die Tintenstrahlaufzeichnung gemäß einem der Ansprüche 1 bis 9 ist.

**Revendications**

1. Encre à base d'eau pour enregistrement par jet d'encre, comprenant un pigment, de l'eau, et un conservateur acide, et un pénétrant, où

   le conservateur acide comprend au moins l'un d'un acide gras insaturé polyvalent, d'un sel d'acide gras insaturé polyvalent, d'acide déshydroacétique, et d'un déshydroacétate,
   le pénétrant comprend au moins l'un d'un alkylène diol et d'un composé éther de glycol,
   les quantités de formulation du conservateur acide et du pénétrant satisfont la condition (Y) suivante :

$$\text{Condition (Y) : } 0{,}1 \leq A/C \leq 5$$

   A : Quantité formulée du conservateur acide (% en poids)
   C : Quantité formulée du pénétrant (% en poids),

   **caractérisé en ce que**
   la teneur en conservateur acide est de 0,5 % en masse à 5,0 % en masse.

2. Encre à base d'eau pour enregistrement par jet d'encre selon la revendication 1, où le pigment est un pigment auto-dispersant.

3. Encre à base d'eau pour enregistrement par jet d'encre selon la revendication 1 ou 2, où l'acide gras insaturé polyvalent est l'acide sorbique,
   et le sel d'acide gras insaturé polyvalent est un sorbate.

4. Encre à base d'eau pour enregistrement par jet d'encre selon la revendication 3, où le sorbate comprend au moins l'un du sorbate de potassium et du sorbate de sodium.

5. Encre à base d'eau pour enregistrement par jet d'encre selon l'une quelconque des revendications 1 à 4, où le déshydroacétate est le déshydroacétate de sodium.

6. Encre à base d'eau pour enregistrement par jet d'encre selon l'une quelconque des revendications 1 à 5, comprenant en outre un tensioactif.

7. Encre à base d'eau pour enregistrement par jet d'encre selon la revendication 6, où le tensioactif est un tensioactif à base d'acétylène.

8. Encre à base d'eau pour enregistrement par jet d'encre selon l'une quelconque des revendications 1 à 7, où au moins l'un de l'alkylène diol et du composé éther de glycol est au moins l'un sélectionné dans le groupe consistant en 1,2-hexanediol, 3-méthyl-1,5-pentanediol, et triéthylène glycol-n-butyl éther (BTG).

9. Encre à base d'eau pour enregistrement par jet d'encre selon l'une quelconque des revendications 6 à 8, où les quantités de formulation du conservateur acide et du tensioactif satisfont la condition (X) suivante :

$$\text{Condition (X) : } 0{,}5 \leq A/B \leq 50$$

A : Quantité formulée du conservateur acide (% en poids)
B : Quantité formulée du tensioactif (% en poids).

10. Cartouche d'encre comprenant une encre à base d'eau pour enregistrement par jet d'encre, l'encre à base d'eau étant l'encre à base d'eau pour enregistrement par jet d'encre selon l'une quelconque des revendications 1 à 9.

[FIG. 1]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1213332 A1
- JP 2004231711 A
- JP H83498 A
- JP 2000513396 A
- JP 2008524400 W
- JP 2009515007 W
- JP 2011515535 W
- JP 2008246821 A